# EUROPEAN PATENT SPECIFICATION

(11) **EP 3 809 421 B1**
(45) Date of publication and mention of the grant of the patent: **03.07.2024**
(21) Application number: 20167415.7
(22) Date of filing: 31.03.2020
(51) Int. Cl.: G21C 3/34, G21C 3/356

(54) **SPACER GRID OF NUCLEAR FUEL ASSEMBLY HAVING SIMPLE SHAPE STRUCTURE**
ABSTANDSGITTER EINER KERNBRENNSTOFFANORDNUNG MIT EINFACHER FORMSTRUKTUR
GRILLE D'ENTRETOISE D'ENSEMBLE DE COMBUSTIBLE NUCLÉAIRE DOTÉE D'UNE STRUCTURE DE FORME SIMPLE

(30) Priority: 14.10.2019 KR 20190126782
(43) Date of publication of application: 21.04.2021
(73) Proprietor: Kepco Nuclear Fuel Co., Ltd., Daejeon 34057 (KR)
(72) Inventor: KIM, Kanghoon, Daejeon 34049 (KR); YUN, Kwangho, Daejeon 34052 (KR); PARK, Sangjoon, Sejong-si 30153 (KR); KIM, Euijae, Daejeon 34957 (KR); KIM, Byeungseok, Daejeon 35202 (KR); LEE, Younghwa, Sejong-si 30150 (KR)
(74) Representative: Cabinet Netter

(56) References cited:
- US-A- 5 247 551
- US-A1- 2005 226 358
- US-B1- 6 393 087

## Description

### CROSS REFERENCE TO RELATED APPLICATION

The present application claims priority to Korean Patent Application No. 10-2019-0126782, filed October 14, 2019.

### BACKGROUND OF THE INVENTION

### Field of the Invention

The present invention relates to a spacer grid of a nuclear fuel assembly that may be manufactured using 3D printing with a high degree of design freedom with the exclusion of sheet metal working and welding processing.

### Description of the Related Art

Nuclear fuel used in a nuclear reactor is made of fuel rods by providing concentrated uranium into cylindrical pellets of a predetermined size and then charging a plurality of pellets into a cladding tube. Subsequently, a plurality of fuel rods as above constitutes a fuel assembly and is loaded into a reactor core and then burned through nuclear reactions.

In general, a nuclear fuel assembly includes a plurality of fuel rods arranged in an axial direction; a plurality of spacer grids arranged in a lateral direction of the fuel rods to support the fuel rods; a plurality of guide tubes fixed to the spacer grids to form a skeleton of the assembly; and a top nozzle and a bottom nozzle which respectively support the upper and lower ends of the guide tube.

The spacer grid is one of major components of the nuclear fuel assembly which restrains lateral movements of the fuel rod and suppresses axial movements by frictional force to maintain an arrangement of the fuel rod. Such spacer grids differ in shapes and numbers depending on the type and design of the reactor. However, the spacer grids are divided into a protective spacer grid, a lower spacer grid, an upper spacer grid, and intermediate spacer grids according to the assembly position with the fuel rod. In addition, the spacer grids have the same structure that provides a grid cell, which is composed of a plurality of grid plates assembled vertically to cross one another so that the fuel rod is inserted and located therein.

In particular, a plurality of the intermediate spacer grids, accounting for most of the spacer grids, is disposed between the lower spacer grid and the upper spacer grid. Accordingly, the plurality of the intermediate spacer grids provides a skeleton of the fuel assembly to maintain the mechanical properties of the fuel rods and, along with a role of supporting the fuel rods, performs a function of mixing primary cooling water so that heat generated from the uranium pellets to be transferred to the primary cooling water through the fuel rod (cladding tube). In addition, the intermediate spacer grids are major components to determine seismic performance of the nuclear fuel, and the dynamic impact strength of the intermediate spacer grids is a major parameter included in a calculation of the seismic performance of the nuclear fuel.

Specifically, each of the spacer grids is provided with, in the grid cell, grid springs for elastically supporting the fuel rod and dimples for limiting horizontal behavior of the fuel rod. Here, the grid springs and dimples are provided by sheet metal working of the grid plates providing each of the grid cells. In general, each of the grid springs and each of the dimples are provided on two surfaces, respectively, facing each other among four surfaces of each grid cell, whereby the fuel rod in each grid cell is elastically supported by two grid springs.

In a manufacturing process of the spacer grid, each of the inner grid plates and the outer grid plates provided by sheet metal working is assembled and fixed on a welding jig provided separately, and then laser beams are irradiated to cross welding parts of the inner grid plates, joints of the inner and outer grid plates, and sleeve joints, whereby laser welding to melt and join a base metal is performed.

On the other hand, the spacer grid is provided with a mixing vane protrudingly provided in a downstream direction of cooling water flow, and the mixing vane has a shape surrounding the periphery of the fuel rod and serves to promote heat transfer through mixing of the cooling water around the fuel rod. In general, the mixing vane has a predetermined shape for changing the cooling water direction and mixing the cooling water by being extended to a top end of the grid plate. As a result, the cooling water mixing performance is determined according to the size, shape, bending angle, and position of the mixing vane.

As described above, a manufacturing process of the conventional spacer grid has a series of processes such as sheet metal process, welding process, and the like. In addition, in the design process, technology for the geometrical design such as mixing vane to secure the dynamic impact strength for the seismic performance and to mix the cooling water is quite complicated.

The spacer grid manufacturing process of the related art is a stabilized technology, but as described above, since a plurality of manufacturing steps is to be performed, many limitations occur in the geometrical design of the spacer grid. In particular, with respect to the spacer grid of the related art, the grid springs and dimples are provided by the sheet metal working of the spacer grid plate, and thus the shapes and numbers of the grid springs and dimples that may be allowed to be designed in each grid cell are limited, thereby limiting a degree of design freedom.

In this regard, it is reported that the impact strength of the spacer grids is greatly reduced at the end of life (EOL) condition. Therefore, even in the development of future fuels and fuel development of active fuel rod length of 14 ft considering high burnup and long term operation, it is inevitably required to secure the seismic performance and mechanical integrity of the nuclear fuel under the EOL conditions. In this respect, since the manufacturing method of the conventional spacer grid has a large number of constraints on the geometrical design as described above, there is a limit in implementing a spacer grid having a strength that is sufficiently stable and high under the EOL conditions.

The foregoing, described as the related art of the present invention, is intended merely to aid in the understanding of the background of the present invention and is not intended to mean that the present invention falls within the purview of the related art that is already known to those skilled in the art.

### Documents of Related Art

### [Patent Document]

(Patent Document 1) Korean Patent Application Publication No. 10-2003-0038493 (May 16, 2003)
(Patent Document 2) Korean Patent No. 10-0771830 (October 30, 2007)

Further relevant related art is US 5 247 551 A, US 6 393 087 B1, and US 2005/226358 A1.

### SUMMARY OF THE INVENTION

Accordingly, the present invention is to improve the problems of the conventional art, and an object is to provide a spacer grid of a nuclear fuel assembly that may be manufactured using 3D printing, which may enhance a degree of design freedom and simplify a manufacturing process, with the exclusion of sheet metal working and welding processing.

In order to achieve the above objective, there is provided a spacer grid of a nuclear fuel assembly according to the present invention as defined in appended claim 1.

Each of the flow channels may be provided at an intersection of the grid cells, and, according to the invention, each of the plurality of the springs and each of the flow channels each may have the same height as height of each of the grid cells.

As described above, the spacer grid of the fuel assembly according to the present invention includes square grid cells having respective inner walls and constituting a square lattice structure, wherein each of the grid cells includes: a plurality of springs for elastically supporting a fuel rod, each of the plurality of the springs having a fixed end along a vertical direction on each of the inner walls and a free end by being curvedly provided in a horizontal direction from the fixed end; a plurality of flow channels each provided in the vertical direction to each of the grid cells; and a plurality of mixing vanes each protrudingly provided in a downstream direction of cooling water flow at end parts of each of the grid cells. As a result, by using 3D printing with a high degree of design freedom with the exclusion of sheet metal working and welding processing, there is an effect in which impact strength can be improved while even simplifying the structure, and pressure drop can be reduced.

### BRIEF DESCRIPTION OF THE DRAWINGS

The above and other objects, features, and other advantages of the present invention will be more clearly understood from the following detailed description when taken in conjunction with the accompanying drawings, in which:
FIG. 1 is a perspective configuration diagram of a spacer grid of a nuclear fuel assembly according to an embodiment of the present invention;
FIG. 2 is a perspective configuration diagram of the spacer grid of the nuclear fuel assembly cut along the line A-A of FIG. 1;
FIG. 3 is a plan configuration diagram of the spacer grid of the nuclear fuel assembly according to the embodiment of the present invention; and
FIG. 4 is a plan configuration diagram of a spacer grid of a nuclear fuel assembly according to another embodiment of the present.

### DETAILED DESCRIPTION OF THE INVENTION

Hereinbelow, exemplary embodiments of the present invention will be described in detail with reference to the accompanying drawings. Throughout the drawings, the same reference numerals will refer to the same or like parts.

Specific structural or functional descriptions presented in the embodiments of the present invention are illustrated only for the purpose of describing the embodiments according to the inventive concept, and the embodiments according to the inventive concept may be implemented in various forms. In addition, the present invention should not be construed as limited to the embodiments described herein but should be understood to include all modifications, equivalents, and substitutes included in the scope of the present invention.

Meanwhile, the term used herein is for the purpose of describing particular example embodiments only and is not intended to be limiting of the present invention.

Singular expressions include plural expressions unless the context clearly indicates otherwise.

The term "comprise" and "have" herein is intended to designate that there is a feature, a number, a step, an action, a component, a part, or a combination thereof that is implemented, and it should be understood that they do not exclude in advance the possibility of the presence or addition of at least one another feature, number, step, action, component, part or combinations thereof.

The present invention is to provide a spacer grid that may be manufactured using metal 3D printing with the exclusion of sheet metal working and welding processing in a manufacturing process of the spacer grid, thereby eliminating restrictions on geometrical design of the spacer grid manufactured by conventional sheet metal working and welding processing and shortening manufacturing processes.

In general, various metal 3D printing apparatuses have been released. For example, a 3D printing apparatus of CONPCEPTLASER of Germany has a maximum fabricable size of 250 × 250 × 280 mm³, whereby a full-size spacer grid may be manufactured. Here, the 3D printing apparatus uses a powder bed fusion (PBF) method, in which a product is manufactured in a manner that a powder layer of several tens *µ*m is laid on a powder bed having a predetermined area in a powder supply device and is melted and laminated one by one after having been selectively irradiated by laser or electron beams according to a design drawing. Meanwhile, the spacer grid of the present invention may adopt a general metal lamination manufacturing method applied in general metal 3D printing and is not limited to a specific method.

Hereinafter, embodiments of the present invention will be described in detail with reference to the accompanying drawings.

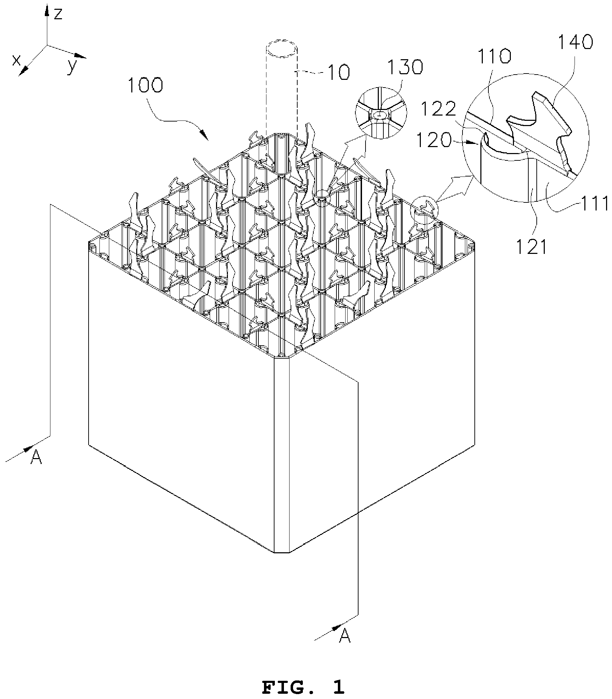

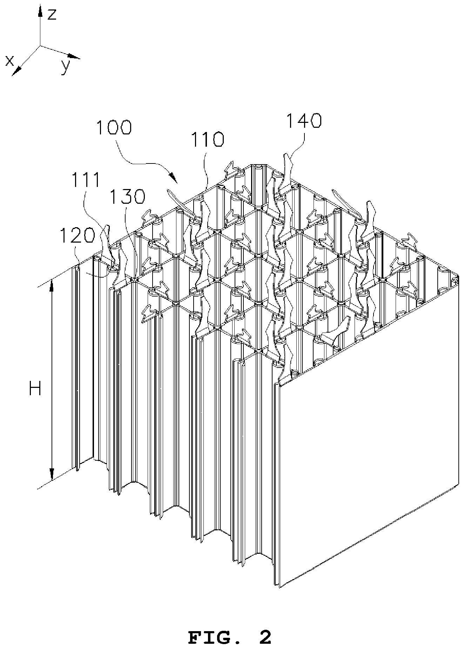

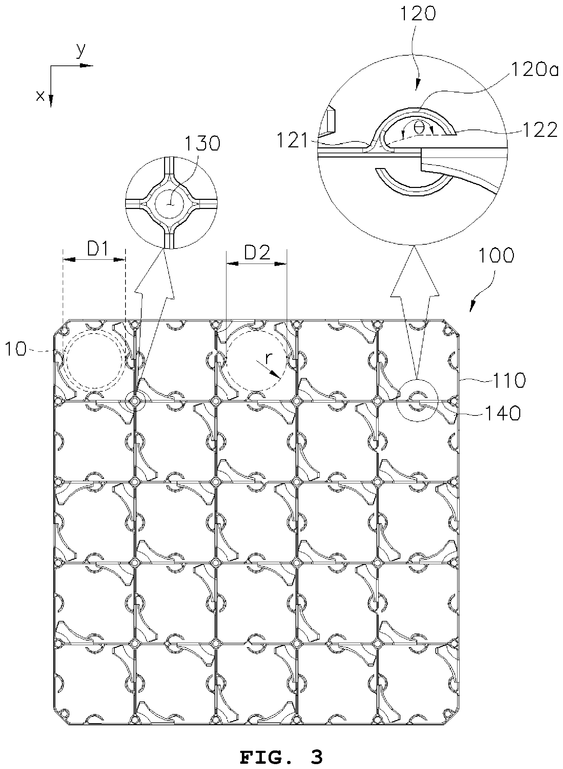

FIG. 1 is a perspective configuration diagram of a spacer grid of a nuclear fuel assembly according to an embodiment of the present invention, FIG. 2 is a perspective configuration diagram of the spacer grid of the nuclear fuel assembly cut along the line A-A of FIG. 1, and FIG. 3 is a plan configuration diagram of the spacer grid of the nuclear fuel assembly according to the embodiment of the present invention. In the following description, a vertical direction corresponds to a z-axis direction on the drawing, and a horizontal direction refers to an x-y plane.

With reference to FIGS. 1 to 3, in the spacer grid 100 of the present embodiment, square grid cells 110 having respective inner walls 111 and constituting a square lattice (n × n) structure are fixed by being touched one another externally, and each of the grid cells 110 is integrally provided with a plurality of springs 120, a plurality of flow channels 130, and a plurality of mixing vanes 140 in the vertical direction (the z-axis direction).

Height of each of the plurality of the springs 120 and each of the flow channels 130 may be the same as height H of each of the grid cells 110.

Each grid cell 110 is a solid plate without having slots or holes provided therein and is provided with the plurality of springs 120 that is curvedly and protrudingly provided. Each of the springs 120 may have a fixed end 121 along the vertical direction on each inner wall 111 and have a free end 122 by being curvedly provided in the horizontal direction (x-y plane) from the fixed end 121. Here, each of the springs 120 may have a substantially semi-cylindrical cross section and have an arc angle θ of at least 180°.

In particular, with reference to FIG. 3, each grid cell 110 is provided with four springs 120 each curvedly provided in a horizontal direction (x-y plane) along a vertical direction on four inner walls 111 each having a square, and a point at maximum height of each of the springs 120 from each corresponding inner wall 111 is located at a distance that is the same as a radius r from a center of the grid cell 110. When the radius is defined by a diameter "D2", the diameter D2, which is a distance between the springs 120 facing each other, is smaller than the outer diameter "D1" of the fuel rod 10 (D2 < D1). Therefore, the fuel rod 10 is elastically supported by the springs 120.

Because four springs are provided at an equal angle (90°) in each square grid cell of the spacer grid of the present invention, the spacer grid configured as above isotropically and elastically supports the fuel rods 10 and at the same time is capable of performing cooling water mixing functions. On the other hand, arrangement of the plurality of the springs disposed at the equal angle on inner sides of each grid cell could not be implemented by conventional sheet metal or welding alone but may be easily manufactured using 3D printing with high degree of design freedom.

The flow channel 130 is integrally provided along the grid cell 110 in the vertical direction, may have a hollow cylindrical shape, and is provided at an intersection of the grid cells 110.

Such a flow channel 130 is integrally provided in the vertical direction to the grid cell 110 to increase the heat exchange efficiency by increasing the contact area with the cooling water and, in particular, is disposed at the intersection of the grid cells 110, thereby dispersing the stress concentration in the spacer grid having the overall square structure and improving the impact characteristics to a diagonal direction of a flank surface of the spacer grid.

The mixing vane 140 is protrudingly provided in a downstream direction of the cooling water flow at an end part of the grid cell 110, and the mixing vane 140 is shown being provided at the top end of the grid cell 110 in the present embodiment. Such a mixing vane 140 having a predetermined angle is disposed at the top end of the grid cell 110 to induce cross flow mixing and rotational flow mixing, and a plurality of mixing vanes having different shapes and angles may be provided according to positions.

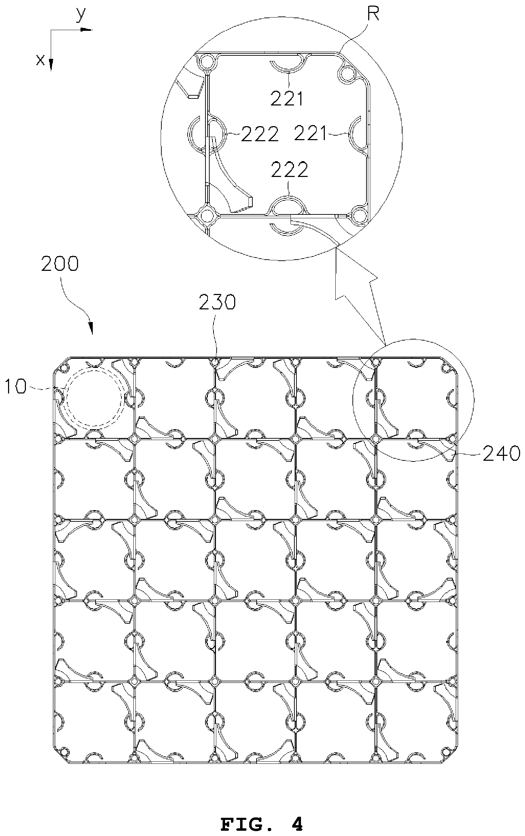

FIG. 4 is a plan configuration diagram of a spacer grid of a nuclear fuel assembly according to another embodiment of the present, and it will be described on the basis of differences omitting description duplicated on the same configuration as the above embodiment.

With reference to FIG. 4, in a spacer grid 200 of the present embodiment, a plurality of springs 221 is provided on two inner walls disposed at a right angle to each other among four inner walls constituting each of the grid cells, and each of dimples is provided, facing each of the plurality of the springs, on each of remaining two inner walls.

Each of the springs 221 has a fixed end along the vertical direction in the inner wall in the same manner as in the previous embodiment and has a free end by being curvedly provided in the horizontal direction from the fixed end. Meanwhile, each of the dimples 222 is curvedly provided in a horizontal direction along a vertical direction on the corresponding inner wall and has fixed opposite ends fixed to the corresponding inner wall.

In the present embodiment, an edge R of the corner of the spacer grid has a chamfer of a curved surface, and this configuration may minimize the interference at the corner edges between the spacer grids disposed adjacent to each other in the fuel assembly. In addition, in the manufacturing of the spacer grid by sheet metal working in the conventional art, it was difficult to implement the spacer grid having such a structure, but it may be easily implemented by 3D printing.

Meanwhile, reference numerals 230 and 240 denote a flow channel and a mixing vane, respectively.

The present invention described above is not limited to the above-described embodiments and the accompanying drawings, and it will be evident to those who have ordinary knowledge in the art that various substitutions, modifications, and changes are possible within the scope as defined by the appended claims.

## Claims

1. A spacer grid (100) of a nuclear fuel assembly for supporting fuel rods of the nuclear fuel assembly, the spacer grid (100) comprising:
square grid cells (110) having respective inner walls (111) and constituting a square lattice structure,
a plurality of flow channels (130) each provided in the vertical direction to each of the grid cells (110); and
a plurality of mixing vanes (140) each protrudingly provided in a downstream direction of cooling water flow at end parts of each of the grid cells (110),
**characterized by**:
that each of the grid cells (110) includes a plurality of springs(120) for elastically supporting a fuel rod, each of the plurality of the springs having a fixed end (121) along a vertical direction on each of the inner walls (111) and a free end (122) by being curvedly provided in a horizontal direction from the fixed end (121); and
that each of the plurality of the springs and each of the flow channels (130) each have the same height as height of each of the grid cells (110).

2. The spacer grid (100) of claim 1, wherein each of the flow channels (130) is provided at an intersection of the grid cells (110).

3. The spacer grid (100) of claim 1, wherein the plurality of the springs is provided on two inner walls disposed at a right angle to each other among four inner walls constituting each of the grid cells (110), and each of dimples is provided, facing each of the plurality of the springs, on each of remaining two inner walls; and each of the dimples is curvedly provided in the horizontal direction along the vertical direction on each corresponding inner wall and has fixed opposite ends fixed to the corresponding inner wall.

## Patentansprüche

1. Abstandsgitter (100) einer Kernbrennstoffbaugruppe zum Unterstützen von Brennstangen der Kernbrennstoffbaugruppe, das Abstandsgitter (100) umfassend:
quadratische Gitterzellen (110), die entsprechende Innenwände (111) aufweisen und eine quadratische Gitterstruktur bilden,
eine Vielzahl von Flusskanälen (130), die jeweils in vertikaler Richtung zu jeder der Gitterzellen (110) bereitgestellt werden; und
eine Vielzahl von Mischschaufeln (140), die jeweils vorstehend in einer nachgelagerten Richtung des Flusses des Kühlwassers an den Endteilen jeder der Gitterzellen (110) bereitgestellt werden,
**dadurch gekennzeichnet:**
**dass** jede der Gitterzellen (110) eine Vielzahl von Federn (120) zum elastischen Unterstützen einer Brennstange einschließt, wobei jede der Vielzahl der Federn ein festes Ende (121) entlang einer vertikalen Richtung an jeder der Innenwände (111) und ein freies Ende (122) aufweist, indem sie gekrümmt in einer horizontalen Richtung von dem festen Ende (121) bereitgestellt wird; und
**dass** jede der Vielzahl der Federn und jeder der Flusskanäle (130) jeweils die gleiche Höhe wie die Höhe jeder der Gitterzellen (110) aufweist.

2. Abstandsgitter (100) nach Anspruch 1, wobei jeder der Flusskanäle (130) an einem Schnittpunkt der Gitterzellen (110) bereitgestellt ist.

3. Abstandsgitter (100) nach Anspruch 1, wobei die Vielzahl der Federn an zwei Innenwänden bereitgestellt ist, die im rechten Winkel zueinander unter vier Innenwänden angeordnet sind, die jede der Gitterzellen (110) bilden, und jede der Vertiefungen, die jeder der Vielzahl der Federn zugewandt sind, an jeder der verbleibenden zwei Innenwände bereitgestellt ist; und jede der Vertiefungen gekrümmt in der horizontalen Richtung entlang der vertikalen Richtung an jeder entsprechenden Innenwand bereitgestellt ist und feste gegenüberliegende Enden aufweist, die an der entsprechenden Innenwand befestigt sind.

## Revendications

1. Grille d'espacement (100) d'un assemblage combustible nucléaire pour supporter des barres de combustible de l'assemblage combustible nucléaire, la grille d'espacement (100) comprenant :
des cellules de grille carrées (110) ayant des parois intérieures (111) respectives et constituant une structure de treillis carré,
une pluralité de canaux d'écoulement (130) agencés chacun dans la direction verticale à chacune des cellules de grille (110) ; et
une pluralité d'ailettes de mélange (140) agencées chacune en saillie dans une direction aval d'écoulement d'eau de refroidissement à des parties d'extrémité de chacune des cellules de grille (110),
**caractérisée :**
**en ce que** chacune des cellules de grille (110) inclut une pluralité de ressorts (120) pour supporter élastiquement une barre de combustible, chacun de la pluralité des ressorts ayant une extrémité fixe (121) le long d'une direction verticale sur chacune des parois intérieures (111) et une extrémité libre (122) en étant agencé de façon courbée dans une direction horizontale depuis l'extrémité fixe (121) ; et
**en ce que** chacun de la pluralité des ressorts et chacun des canaux d'écoulement (130) ont chacun la même hauteur que la hauteur de chacune des cellules de grille (110).

2. Grille d'espacement (100) de la revendication 1, dans laquelle chacun des canaux d'écoulement (130) est agencé à une intersection des cellules de grille (110).

3. Grille d'espacement (100) de la revendication 1, dans laquelle la pluralité des ressorts est agencée sur deux parois intérieures disposées à angle droit l'une par rapport à l'autre parmi quatre parois intérieures constituant chacune des cellules de grille (110), et chacun de crans est agencé, en face de chacun de la pluralité des ressorts, sur chacune de deux parois intérieures restantes ; et chacun des crans est agencé de façon courbée dans la direction horizontale le long de la direction verticale sur chaque paroi intérieure correspondante et a des extrémités opposées fixes fixées à la paroi intérieure correspondante.
